# EUROPEAN PATENT SPECIFICATION

(11) **EP 2 555 573 B1**
(45) Date of publication and mention of the grant of the patent: **29.11.2017**
(21) Application number: 11761945.2
(22) Date of filing: 10.03.2011
(51) Int. Cl.: H04W 72/04

(54) **METHOD AND DEVICE FOR TRANSMITTING APERIODIC SOUNDING REFERENCE SIGNAL (SRS)**
VERFAHREN UND VORRICHTUNG ZUR ÜBERTRAGUNG APERIODISCHER KLANGREFERENZSIGNALE
PROCÉDÉ ET DISPOSITIF POUR ENVOYER UN SIGNAL DE RÉFÉRENCE DE SONDAGE APÉRIODIQUE

(30) Priority: 31.03.2010 CN 201010138981
(43) Date of publication of application: 06.02.2013
(73) Proprietor: China Academy of Telecommunications Technology, Hai Dian District Beijing 100191 (CN)
(72) Inventor: CHEN, Wenhong, Beijing 100191 (CN); MIAO, Deshan, Beijing 100191 (CN); PAN, Xueming, Beijing 100191 (CN); SUN, Shaohui, Beijing 100191 (CN)
(74) Representative: Cabinet Chaillot
(86) International application number: PCT/CN2011/071667
(87) International publication number: WO 2011/120371

(56) References cited:
- CN-A- 101 827 444
- US-A1- 2009 290 514
- ERICSSON ET AL: "Further Discussions on SRS Enhancements", 3GPP DRAFT; R1-100860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418466, [retrieved on 2010-02-16]
- CATT: "SRS Enhancements for LTE-A", 3GPP DRAFT; R1-100893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418495, [retrieved on 2010-02-16]
- MOTOROLA: "Views on SRS Enhancements for LTE-A", 3GPP DRAFT; R1-101134 - SRS ENHANCEMENTS LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 17 February 2010 (2010-02-17), XP050418982, [retrieved on 2010-02-17]
- NOKIA SIEMENS NETWORKS ET AL: "Channel sounding enhancements for LTE-Advanced uplink", 3GPP DRAFT; R1-101438, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418900, [retrieved on 2010-02-16]
- ALCATEL-LUCENT ET AL: "SRS Enhancement", 3GPP DRAFT; R1-100939_SRS_ENHANCEMENT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418536, [retrieved on 2010-02-16]
- NOKIA SIEMENS NETWORKS ET AL: "Channel sounding enhancements for LTE-Advanced", 3GPP DRAFT; R1-100337, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418003, [retrieved on 2010-01-12]
- ASUSTEK: 'Discussion on Dynamic Aperiodic Sounding' 3GPP TSG RAN WG1 MEETING #60 RL-100997 22 February 2010 - 26 February 2010, XP050418577
- SAMSUNG: 'SRS Transmission Issues in LTE-A' 3GPP TSG RAN WG1 #57BIS R1-092677 29 June 2009 - 03 July 2009, XP050351157
- MITSUBISHI ELECTRIC: "UL Sounding RS Control Signaling for Antenna Selection", 3GPP DRAFT; R1-073932, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107490, [retrieved on 2007-10-02]

## Description

### Field of the Invention

The present invention relates to the field of communication technology, in particular to the method and device for transmitting aperiodic Sounding Reference Signal (SRS).

### Background of the Invention

In the existing system, the uplink channel sounding is realized through sounding signal. By sending sounding signal on the last symbol in SRS sub-frame through a terminal, a base station can get the uplink channel information, thus can conduct uplink transmit resource scheduling and measurement, including measurement of Rank Indication (RI)/Precoding Matrix Indicator (PMI)/Channel Quality Indication (CQI). SRS in Long Term Evolved (LTE) system is transmitted periodically, i.e., the terminal will send sounding signal on a periodic basis until it enters into a state of no data transmission. Parameters of periodic SRS are of higher layer configuration, including Cycle Shift (CS), bandwidth, frequency-hopping parameter and cycle of SRS as well as sub-frame position allowing transmission of SRS.

Periodic SRS often occupies a lot of physical resources because of long dispatching cycle and low dispatching efficiency. In particular in Long Term Evolved Advanced (LTE-A) system, a User Equipment (UE), i.e. a terminal, often needs to transmit multi-antenna SRS, thus there is a larger consumption of resources. To increase resource utilization of SRS and decrease resource consumption of SRS, aperiodic SRS transmission is introduced in the LTE-A system.

Different from periodic SRS, aperiodic SRS is dynamically activated by the base station. Once the terminal is activated, it will send the sounding signal for once only rather than periodically. Through aperiodic sounding signal, the base station can get necessary channel information in a more flexible way, i.e. to disable or cut down periodic SRS transmission if condition allows, thereby decreasing physical resource consumption of SRS.

Since both the periodic SRS and aperiodic SRS are transmitted on cell-specific SRS sub-frame, it is necessary to solve problems about how to conduct resource scheduling of aperiodic SRS in order to provide enough physical resources and how to ensure no resource conflict with the periodic SRS. Besides, after receiving the parameter configuration and activation signaling sent by the base station, the terminal can also transmit SRS in a flexible way.

The prior art comprises configuration of parameters of aperiodic SRS by introduction of SRS-specific Downlink Control Information (DCI) format in Physical Downlink Control Channel (PDCCH), and multiplexing with other uplink formats, e.g. format(), by employing the same length, thus realizing dynamic configuration of resources. Upon receiving the control signaling sent by the base station, the terminal can conduct aperiodic SRS transmission according to the time-frequency resources indicated in the control signaling, and can also be activated by using only 1 bit signaling in Uplink grant (UL grant) or Downlink grant (DL grant) at the same time. Other parameters are set through high layer.

In the process of realizing the objects of the present invention, at least the following problems existing in the prior art were found:
In the prior art, configuration of aperiodic SRS by introduction of SRS-specific DCI format will greatly increase resource consumption of PDCCH, and may cause waste of resources to a certain degree because of few bits. In case of a plurality of activated users, the resource consumption will be too much for PDCCH.

The document ERICSSON ET AL : " Further Discussions on SRS Enhancements", 3GPP Draft ; R1-100860, 3rd Generation Partnership Project (3GPP), Mobile Competence Centre ; 650, route des Lucioles ; F-06921 Sophia-Antipolis Cedex ; France, vol. RAN WG1, no. San Francisco, USA ; 20100222, 16 February 2010 (2010-02-16), the document CATT : "SRS Enhancements for LTE-A", 3GPP Draft ; R1-100893, 3rd Generation Partnership Project (3GPP), Mobile Competence Centre ; 650, route des Lucioles ; F-06921 Sophia-Antipolis Cedex ; France, vol. RAN WG1, no. San Francisco, USA; 20100222, 16 February 2010 (2010-02-16), the document MOTOROLA : "Views on SRS Enhancements for LTE-A", 3GPP Draft ; R1-101134 - SRS Enhancements LTE-A, 3rd Generation Partnership Project (3GPP), Mobile Competence Centre ; 650, route des Lucioles ; F-06921 Sophia-Antipolis Cedex ; France, vol. RAN WG1, no. San Francisco, USA ; 20100222, 17 February 2010 (2010-02-17), the document NOKIA SIEMENS NETWORKS ET AL : "Channel sounding enhancements for LTE-Advanced uplink", 3GPP Draft ; R1-101438, 3rd Generation Partnership Project (3GPP), Mobile Competence Centre ; 650, route des Lucioles ; F-06921 Sophia-Antipolis Cedex ; France, vol. RAN WG1, no. San Francisco, USA; 20100222, 16 February 2010 (2010-02-16), the document ALCATEL-LUCENT ET AL : "SRS Enhancement", 3GPP Draft ; R1-100939_SRS_enhancement_final, 3rd Generation Partnership Project (3GPP), Mobile Competence Centre ; 650, route des Lucioles ; F-06921 Sophia-Antipolis Cedex ; France, vol. RAN WG1, no. San Francisco, USA; 20100222, 16 February 2010 (2010-02-16), and the document NOKIA SIEMENS NETWORKS ET AL : "Channel sounding enhancements for LTE-Advanced", 3GPP Draft; R1-100337, 3rd Generation Partnership Project (3GPP), Mobile Competence Centre ; 650, route des Lucioles ; F-06921 Sophia-Antipolis Cedex ; France, vol. RAN WG1, no. Valencia, Spain; 20100118, 12 January 2010 (2010-01-12) disclose various enhancements concerning Sounding Reference Signal (SRS) using aperiodic SRS.

### Summary of the Invention

The invention is defined in the independent claims. Optional embodiments are set out in the dependent claims. Compared with the prior art, the embodiments of the present invention have the following advantages:
By applying the technical solution of the embodiments in the present invention, and semi-static configuration through higher layer signaling, signaling overhead is decreased. Since different sub-frames can be set with different or the same Cycle Shift (CS) and resource positions, the system is of high flexibility; aperiodic SRS may be transmitted in a plurality of sub-frames to reduce system delay and increase detection bandwidth. Moreover, the relatively flexible timing mode can be set in the terminal without bringing too many limits on the scheduling.

### Brief Description of the Drawings

For a better understanding of the technical solution in the embodiments of the present invention or the prior art, the drawings required to use in description of the embodiments or the prior art will be introduced briefly herein below. Obviously, the drawings described below are a plurality of embodiments of the present invention. Those skilled in the art can also get other drawings according to these drawings without creative work.
Figure 1 is a flow diagram of a method for transmitting aperiodic SRS at the terminal side proposed by the embodiments of the present invention;
Figure 2 is flow diagram of a method for transmitting aperiodic SRS at the base station side proposed by the embodiments of the present invention;
Figure 3 is a flow diagram of a method for transmitting aperiodic SRS in a specific application proposed by the embodiments of the present invention;
Figure 4 is a structural diagram of a terminal proposed by the embodiments of the present invention;
Figure 5 is a structural diagram of a base station proposed by the embodiments of the present invention.

### Detailed Description of Preferred Embodiments

The technical solution in the embodiments of the present invention is explained in a clear and complete way with reference to the drawings in the embodiments of the present invention. Obviously, the embodiments described herein below are only a plurality of embodiments of the present invention rather than all. All other embodiments gained by those skilled in the art on the basis of the embodiments in the present invention without any creative work shall fall within the protection scope of the present invention as defined by the appended claims.

Embodiments not covered by the claims are to be regarded as examples. In the existing technical solutions, periodic SRS needs to occupy more physical resources for introduction of multi-antenna transmission in LTE-A system. To improve SRS resource utilization and reduce SRS resource consumption, a aperiodic SRS transmission is introduced in the LTE-A system to activate the one-time sounding signal through dynamic scheduling.

It is necessary to solve problems about how to conduct resource scheduling of aperiodic SRS and how to send aperiodic SRS after the terminal receives the signaling sent by the base station.

The embodiments of the present invention provide a method for transmitting aperiodic SRS. A base station sets the parameters of aperiodic SRS through high layer signaling and a terminal transmits SRS according to the settings, thus it is possible to conduct resource scheduling and transmission of aperiodic SRS reasonably and effectively.

For the purpose of solving the problems existed in the prior art, the embodiments of the present invention present a method for transmitting aperiodic SRS in consideration of the compatibility of LTE system.

The embodiments of the present invention provide a method for transmitting aperiodic SRS comprising the following steps: the base station informs the terminal through higher layer signaling of setting the parameters of aperiodic SRS, and the terminal transmits aperiodic SRS according to the corresponding settings of parameters in a flexible way.

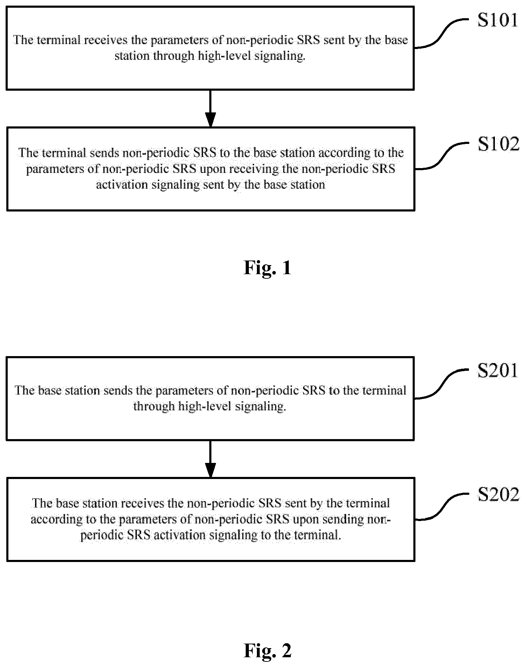

Fig.1 is a flow diagram of a method for transmitting aperiodic SRS disclosed by the embodiments of the present invention comprising the following steps:
Step S101 the terminal receiving the parameters of aperiodic SRS sent by the base station through higher layer signaling.

Wherein, the parameters of aperiodic SRS include:
(1) Sub-frame configuration information of SRS, comprising configuration cycle of sub-frame.
(2) Frequency domain configuration information of SRS, comprising the following one or more parameter(s):
   Initial location of frequency domain resource, transmission bandwidth, transmission comb and frequency-hopping bandwidth.

Frequency domain configuration information of SRS in specific application scenarios comprises: Information set separately for transmission sub-frames of aperiodic SRS of the terminal in a cycle; or,

Information set for all transmission sub-frames of aperiodic SRS of the terminal.
(3) Cycle shift value

It should be further noted that if the aperiodic SRS supports one-port transmission, the parameters of aperiodic SRS also include:
(4) SRS transmission mode information.

Step S102: the terminal sending aperiodic SRS to the base station according to the parameters of aperiodic SRS upon receiving the aperiodic SRS activation signaling sent by the base station, specifically:
The terminal sends aperiodic SRS to the base station in the current sub-frame according to the parameters of aperiodic SRS upon receiving the aperiodic SRS activation signaling and presetting a plurality of sub-frames; or,

The terminal sends aperiodic SRS to the base station in the nearest one or more aperiodic SRS transmission sub-frame(s) of the current sub-frame according to the parameters of aperiodic SRS upon receiving the aperiodic SRS activation signaling and presetting a plurality of sub-frames.

It should be further noted that if the terminal received more than once activation commands between two transmissions of aperiodic SRS, the terminal sends aperiodic SRS to the base station in the nearest aperiodic SRS transmission sub-frame for only once.

The above processing flow is for a method for transmitting aperiodic SRS disclosed by the embodiments of the present invention at the terminal side. Accordingly, the embodiments of the present invention further provide the flow at the base station side.

Fig.2 is a flow diagram of a method for transmitting aperiodic SRS at the base station side provided by the embodiments of the present invention comprising the following steps:
Step S201: the base station sending the parameters of aperiodic SRS to the terminal through higher layer signaling.

Wherein, the parameters of aperiodic SRS are as described in step S101 and will not be described hereinafter repeatedly.

Step S202: the base station receiving the aperiodic SRS sent by the terminal according to the parameters of aperiodic SRS upon sending aperiodic SRS activation signaling to the terminal.

Corresponding to the two transmission policies in step S102, the execution flow of this step is:
The base station receives the aperiodic SRS sent by the terminal in the current sub-frame according to the parameters of aperiodic SRS upon receiving the aperiodic SRS activation signaling and presetting a plurality of sub-frames; or,

The base station receives the aperiodic SRS sent by the terminal in the nearest one or more aperiodic SRS transmission sub-frame(s) of the current sub-frame according to the parameters of aperiodic SRS upon receiving the aperiodic SRS activation signaling and presetting a plurality of sub-frames.

Compared with the prior art, the embodiments of the present invention have the following advantages:
By applying the technical solution of the embodiments in the present invention, a Base Station (BS) performs semi-static configuration of the aperiodic SRS on a mobile terminal through higher layer signaling to decrease signaling overhead. On the one hand, different sub-frames can be set with different or the same Cycle Shift (CS) and resource positions to increase the system configuration flexibility; On the other hand, aperiodic SRS may be transmitted in a plurality of sub-frames to reduce system delay and increase detection bandwidth. Moreover, the relatively flexible timing mode can be set in the terminal without bringing too many limits on the scheduling.

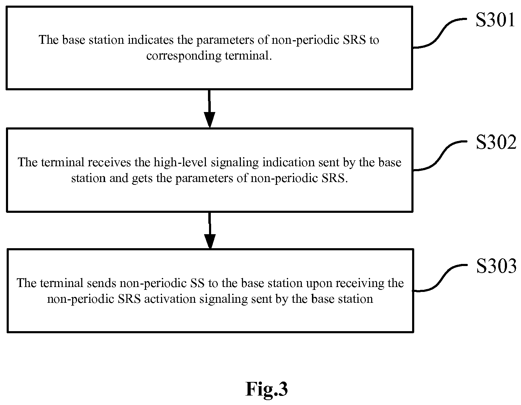

The technical solution disclosed in the embodiments of the prevent invention are described hereinbelow in connection with the specific application scenarios:
As shown in Fig.3, which is a flow diagram of a method for transmitting aperiodic SRS in a specific application provided by the embodiments of the present invention, the method comprises the following steps:
   Step S301: the base station indicating the parameters of aperiodic SRS to corresponding terminal, at least comprising the following contents:
      (1) Sub-frame configuration of SRS

It is used to indicate the position of sub-frame allowing transmission of aperiodic SRS.

Wherein, it can also include the indication of parameters such as the configuration cycle of sub-frame. Corresponding cycle can be predetermined rather than indicated by the signaling.
(2) Frequency domain configuration of SRS

It is used to indicate the position of frequency domain resource occupied by transmission of sounding.

Wherein, the frequency domain configuration of SRS comprises the indication of parameters such as the initial position of frequency domain resource, transmission bandwidth, transmission comb and frequency hopping bandwidth. Sounding frequency domain can be set for aperiodic SRS transmission sub-frames in a certain period separately, or for all aperiodic SRS transmission sub-frames in a unified way;
(3) Cycle shift value

It is used to indicate the cycle shift of SRS sequence on one or more antenna(s).

For example, the LTE method can be reused to indicate the cycle shift value of a first antenna (port), and the cycle shift value of other antennas (ports) are gained by predefinition. The cycle shift value can be set for aperiodic SRS transmission sub-frames in a certain period separately, or for all aperiodic SRS transmission sub-frames in a unified way.

It should be noted that if the aperiodic SRS supports one-port transmission, the parameters also include:
(4) SRS transmission mode setting for indicating that the terminal transmits SRS by adopting one-port or multi-port (antenna) mode;

In specific application scenarios, aperiodic SRS parameters and periodic SRS parameters are set separately, but it does not rule out the possibility that the parameters of two are the same.

Step S302: the terminal receiving the higher layer signaling indication sent by the base station and gets parameters of aperiodic SRS.

Step S303: the terminal sending aperiodic SRS to the base station upon receiving the aperiodic SRS activation signaling sent by the base station.

There is a plurality of ways for sending the aperiodic SRS as described hereinbelow:
Case I: the terminal sends aperiodic SRS after k sub-frames upon receiving the activation signaling. The aperiodic SRS transmission parameters are gained by following the aforesaid step S201.

Case II: the terminal sends aperiodic SRS within a plurality of nearest aperiodic SRS transmission sub-frames after k sub-frames upon receiving the activation signaling.

For instance, the terminal might send the aperiodic SRS within the nearest one aperiodic SRS transmission sub-frame. Aperiodic SRS transmission parameters are also gained by following the aforesaid step S201.

It is to be noted that the k should be a nonnegative integer, and typical values including k=0 or k=4. The variation of value shall not influence the protection scope of the present invention.

If the terminal received more than once activation commands between two transmissions of aperiodic SRS, the terminal sends the aperiodic SRSs to the base station in the nearest aperiodic SRS transmission sub-frame for only once.

The present invention which is widely applicable can be used for the uplink transmission in the following scenarios:
Arbitrary antenna quantity and antenna array, linear array and polarization sensitive array;
Arbitrary duplexing system, Time Division Duplexing (TDD) system or Frequency Division Duplexing (FDD) system;
Arbitrary sending mode, Single User Multiple Input Multiple Output (SU-MIMO), Multiple User Multiple Input Multiple Output (MU-MIMO), Coordinated Multiple Point Transmission and Reception (CoMP) for instance.

Compared with the prior art, the embodiments of the present invention have the following advantages:
By applying the technical solution of the embodiments in the present invention, a Base Station (BS) performs semi-static configuration of the aperiodic SRS on a mobile terminal through higher layer signaling to decrease signaling overhead. On the one hand, different sub-frames can be set with different or the same Cycle Shift (CS) and resource positions to increase the system configuration flexibility; On the other hand, aperiodic SRS may be transmitted in a plurality of sub-frames to reduce system delay and increase detection bandwidth. Moreover, the relatively flexible timing mode can be set in the terminal without bringing too many limits on the scheduling.

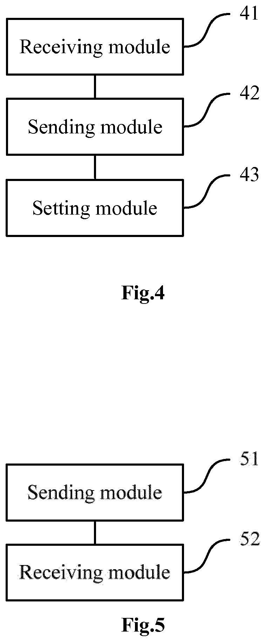

For the implementation of the technical solution described in the embodiments of the present invention, the embodiments of the present invention also provide a terminal, the structural diagram of which is shown in Fig.4, comprising:
A receiving module 41 used to receive parameters of aperiodic SRS and aperiodic SRS activation signaling sent by the base station through higher layer signaling;
   Preferably, the parameters of aperiodic SRS comprising:
      Sub-frame configuration information of SRS;
      Frequency domain configuration information of SRS;
      Cycle shift value.

Preferably, if the aperiodic SRS supports one-port transmission, the parameters of aperiodic SRS also include:
SRS transmission mode information.

A sending module 42 used to send aperiodic SRS to the base station according to the parameters of aperiodic SRS received by the receiving module 41 after the receiving module 41 receives the aperiodic SRS activation signaling sent by the base station.

The terminal further includes:
A setting module 43 used to set the aperiodic SRS sending policy for the sending module 42, which comprises the following steps:
   The terminal sends aperiodic SRS to the base station in the current sub-frame according to the parameters of aperiodic SRS upon receiving the aperiodic SRS activation signaling and presetting a plurality of sub-frames; or,

The terminal sends aperiodic SRS to the base station in the nearest one or more aperiodic SRS transmission sub-frame(s) of the current sub-frame according to the parameters of aperiodic SRS upon receiving the aperiodic SRS activation signaling and presetting a plurality of sub-frames.

Accordingly, the embodiments of the present invention also provide a base station, the structural diagram of which is as shown in Fig.5, comprising:
A sending module 51 used to send higher layer signaling including the parameters of aperiodic SRS and aperiodic SRS activation signaling to the terminal;
A receiving module 52 used to receive the aperiodic SRS sent by the terminal according to the parameters of aperiodic SRS after the sending module 51 sends the aperiodic SRS activation signaling to the terminal.

Wherein, the specific content of the parameters of aperiodic SRS have been described hereinabove and will not be further described hereinbelow.

Compared with the prior art, the embodiments of the present invention have the following advantages:
By applying the technical solution of the embodiments in the present invention, a Base Station (BS) performs semi-static configuration of the aperiodic SRS on a mobile terminal through higher layer signaling to decrease signaling overhead. On the one hand, different sub-frames can be set with different or the same Cycle Shift (CS) and resource positions to increase the system configuration flexibility; On the other hand, aperiodic SRS may be transmitted in a plurality of sub-frames to reduce system delay and increase detection bandwidth. Moreover, the relatively flexible timing mode can be set in the terminal without bringing too many limits on the scheduling.

With the description of the preferred embodiments hereinabove, those skilled in the art can clearly understand that the present invention can be realized with the aid of software and necessary commonly used hardware platforms, or the aid of hardware of course, but the former is a preferred embodiment in most cases. Based on this understanding, the technical proposal of the present invention or the part contributing to the prior art can be reflected in the form of a software product, which is saved in a memory medium comprising instructions to enable a computer, which could be a personal computer, a server or a network device, to carry out the methods for each embodiment of the present invention.

Those skilled in the art can understand that the drawings are only schematic drawings of a preferred embodiment, and the module or procedure in the drawings is not necessarily a must for the embodiments of the present invention.

Those skilled in the art can understand that the modules in the device of the embodiments can be distributed in the device of the embodiments according to the description of the embodiments, and can be placed in a or more device(s) different from the embodiment after corresponding changes as well. The aforesaid modules of the embodiment can be incorporated into a module or further split into a plurality of modules.

The aforesaid serial number of the embodiments of the present invention is used only for description and shall not indicate any rank of the embodiments with respect to advantages or disadvantages.

The aforesaid disclosures are only a plurality of embodiments of the present invention and the present invention is not confined to them. All changes that those skilled in the art can think of shall fall within the protection scope of the present invention as defined by the appended claims.

## Claims

1. A method for transmitting an aperiodic sounding reference signal, SRS, comprising:
a terminal receiving (S101) parameters of aperiodic SRS sent by a base station through high layer signaling;
the terminal sending (S102) aperiodic SRS to the base station according to the parameters of aperiodic SRS upon receiving an aperiodic SRS activation signaling sent by the base station,
wherein the parameters of the aperiodic SRS comprise frequency domain configuration information of the SRS, and
the method is **characterized in that** the frequency domain configuration information of the SRS comprises:
information configured separately for each of transmission sub-frames of the aperiodic SRS of the terminal in a cycle; or,
information configured for all transmission sub-frames of the aperiodic SRS of the terminal.

2. The method according to claim 1, wherein the parameters of the aperiodic SRS further comprise:
sub-frame configuration information of the SRS;
a cycle shift value;
wherein if the aperiodic SRS supports one-port transmission, the parameters of the aperiodic SRS further comprise SRS transmission mode information.

3. The method according to claim 2, wherein the sub-frame configuration information of the SRS comprises a sub-frame configuration cycle parameter; and
the frequency domain configuration information comprises one or more of the following parameter(s):
initial location of frequency domain resource, transmission bandwidth, transmission comb and frequency-hopping bandwidth.

4. The method according to claim 1, wherein the terminal sending (S102) aperiodic SRS to the base station according to the parameters of aperiodic SRS upon receiving the aperiodic SRS activation signaling sent by the base station, specifically comprises:
the terminal sending aperiodic SRS to the base station in a current sub-frame according to the parameters of the aperiodic SRS when the aperiodic SRS activation signaling is received and a preset number of sub-frames elapses; or,
the terminal sending aperiodic SRS to the base station in a nearest one or more aperiodic SRS transmission sub-frame(s) of a current sub-frame according to the parameters of the aperiodic SRS when the aperiodic SRS activation signaling is received and a preset number of sub-frames elapses.

5. A terminal, comprising:
a receiving module (41) used to receive a high layer signaling including parameters of an aperiodic sounding reference signal, SRS, and an aperiodic SRS activation signaling sent by a base station; and
a sending module (42) used to send aperiodic SRS to the base station according to the parameters of the aperiodic SRS received by the receiving module (41) after the receiving module (41) receives the aperiodic SRS activation signaling sent by the base station,
wherein the parameters of the aperiodic SRS comprise frequency domain configuration information of the SRS, and
the terminal is **characterized in that** the frequency domain configuration information of the SRS comprises:
information configured separately for each of transmission sub-frames of the aperiodic SRS of the terminal in a cycle; or,
information configured for all transmission sub-frames of the aperiodic SRS of the terminal.

6. The terminal according to claim 5, wherein the parameters of the aperiodic SRS further comprise:
sub-frame information of the SRS;
a cycle shift value;
wherein if the aperiodic SRS supports one-port transmission, the parameters of the aperiodic SRS further comprise SRS transmission mode information.

7. The terminal according to claim 5, further comprising:
a setting module (43) used to set an aperiodic SRS sending policy for the sending module (42),
wherein the aperiodic SRS sending policy comprises:
the terminal sending aperiodic SRS to the base station in a current sub-frame according to the parameters of the aperiodic SRS when the aperiodic SRS activation signaling is received and a preset number of sub-frames elapses; or,
the terminal sending aperiodic SRS to the base station in a nearest one or more aperiodic SRS transmission sub-frame(s) of a current sub-frame according to the parameters of the aperiodic SRS when the aperiodic SRS activation signaling is received and a preset number of sub-frames elapses.

8. A method for transmitting an aperiodic sounding reference signal, SRS, comprising:
a base station sending (S201) parameters of aperiodic SRS to a terminal through high layer signaling; and
the base station receiving (S202) the aperiodic SRS sent by the said terminal according to the parameters of the aperiodic SRS when the base station sends aperiodic SRS activation signaling to the terminal,
wherein the parameters of the aperiodic SRS comprise frequency domain configuration information of the SRS, and
the method is **characterized in that** the frequency domain configuration information of the SRS comprises:
information configured separately for each of transmission sub-frames of the aperiodic SRS of the terminal in a cycle; or,
information configured for all transmission sub-frames of the aperiodic SRS of the terminal.

9. The method according to claim 8, wherein the parameters of the aperiodic SRS further comprise:
sub-frame configuration information of the SRS;
a cycle shift value;
wherein if the aperiodic SRS supports one-port transmission, the parameters of the aperiodic SRS further comprise SRS transmission mode information.

10. The method according to claim 9, wherein the sub-frame configuration information of the SRS comprises a sub-frame configuration cycle parameter; and
the frequency domain configuration information further comprises one or more of the following parameter(s):
initial location of frequency domain resource, transmission bandwidth, transmission comb and frequency-hopping bandwidth of frequency domain.

11. The method according to claim 8, wherein the base station receiving (S202) the aperiodic SRS sent by the terminal according to the parameters of aperiodic SRS upon sending aperiodic SRS activation signaling to the terminal, specifically comprises:
the base station receiving the aperiodic SRS, which is sent by the terminal in a current sub-frame according to the parameters of the aperiodic SRS when the aperiodic SRS activation signaling is received and a preset number of sub-frames; or,
the base station receiving the aperiodic SRS, which is sent by the terminal in a nearest one or more aperiodic SRS transmission sub-frame(s) of a current sub-frame according to the parameters of the aperiodic SRS when the aperiodic SRS activation signaling is received and a preset number of sub-frames elapses.

12. A base station, comprising:
a sending module (51) used to send a high layer signaling including parameters of an aperiodic sounding reference signal, SRS, and an aperiodic SRS activation signaling to the terminal; and
a receiving module (52) used to receive the aperiodic SRS sent by the terminal according to the parameters of aperiodic SRS after the sending module (51) sends the aperiodic SRS activation signaling to the terminal,
wherein the parameters of the aperiodic SRS comprise frequency domain configuration information of the SRS, and
the base station is **characterized in that** the frequency domain configuration information of the SRS comprises:
information configured separately for each of transmission sub-frames of the aperiodic SRS of the terminal in a cycle; or,
information configured for all transmission sub-frames of the aperiodic SRS of the terminal.

13. The base station according to claim 12, wherein the parameters of the aperiodic SRS further comprises:
sub-frame information of the SRS;
a cycle shift value;
wherein if the aperiodic SRS supports one-port transmission, the parameters of the aperiodic SRS further comprise SRS transmission mode information.

## Patentansprüche

1. Verfahren zum Übertragen eines aperiodischen Klangreferenzsignals, SRS, mit:
einem Terminal zum Empfang (S101) von Parametern aperiodischer SRS, die von einer Basisstation durch Hochschichtsignale gesendet werden;
der Terminal sendet (S102) aperiodische SRS an die Basisstation gemäß den Parametern aperiodischer SRS nach Empfang eines Aktivierungssignals für aperiodische SRS von der Basisstation,
wobei die Parameter der aperiodischen SRS Frequenzbereichs-Konfigurations-Informationen der SRS umfassen, und
das Verfahren **dadurch gekennzeichnet ist, dass** die Frequenzbereichs-Konfigurations-Informationen der SRS folgendes umfassen:
separat konfigurierte Informationen für jeden der Übertragungs-Subframes der aperiodischen SRS des Terminals in einem Zyklus; oder,
Informationen, die für alle Übertragungs-Subframes der aperiodischen SRS des Terminals konfiguriert sind.

2. Verfahren nach Anspruch 1, wobei die Parameter des aperiodischen SRS des weiteren umfassen:
Subframe-Konfigurationsinformationen des SRS;
einen Zyklenwechselwert;
wobei, wenn das aperiodische SRS Eintorübertragung unterstützt, die Parameter des aperiodischen SRS des weiteren Informationen zur SRS-Übertragungsart umfassen.

3. Verfahren nach Anspruch 2, wobei die Subframe-Konfigurationsinformationen des SRS einen Subframe-Konfigurationszyklus-Parameter umfassen; und
die Frequenzbereichs-Konfigurations-Informationen einen oder mehrere der folgende Parameter umfassen:
anfängliche Lage der Frequenzbereich-Ressource, Übertragungsbandbreite, Übertragungskamm und Frequenzsprung-Bandbreite.

4. Verfahren nach Anspruch 1, wobei der Terminal (S102), der aperiodische SRS an die Basisstation sendet, gemäß den Parametern von aperiodischen SRS nach Empfang des Aktivierungssignals für aperiodische SRS, das von der Basisstation geschickt wird, spezifisch umfasst:
der Terminal sendet aperiodische SRS an die Basisstation in einem aktuellen Subframe gemäß den Parametern des aperiodischen SRS, wenn das Aktivierungssignal für aperiodische SRS empfangen wird und eine voreingestellte Zahl der Subframes abgelaufen ist; oder,
der Terminal sendet aperiodische SRS an die Basisstation in einem nächstliegenden oder mehreren aperiodischen SRS-Übertragungs-Subframes eines aktuellen Subframes gemäß den Parametern des aperiodischen SRS, wenn das Aktivierungssignal für aperiodische SRS empfangen wird und eine voreingestellte Zahl der Subframes abgelaufen ist.

5. Terminal, mit:
einem Empfangsmodul (41) zum Empfang eines Hochschichtsignals einschließlich Parameter eines aperiodischen Klangreferenzsignals, SRS, und eines Aktivierungssignal für aperiodische SRS, das von einer Basisstation gesendet wird; und
einem Sendemodul (42), um aperiodische SRS an die Basisstation zu senden, gemäß den Parametern des aperiodischen SRS, die von dem Empfangsmodul (41) empfangen werden, nachdem das Empfangsmodul (41) das Aktivierungssignal für aperiodische SRS empfangen hat, das von der Basisstation gesendet wurde,
wobei die Parameter des aperiodischen SRS Frequenzbereichs-Konfigurations-Informationen des SRS umfassen, und
der Terminal **dadurch gekennzeichnet ist, dass** die Frequenzbereichs-Konfigurations-Informationen des SRS folgendes umfassen:
separat konfigurierte Informationen für jeden der Übertragungs-Subframes des aperiodischen SRS des Terminals in einem Zyklus; oder,
Informationen, die für alle Übertragungs-Subframes des aperiodischen SRS des Terminals konfiguriert sind.

6. Terminal nach Anspruch 5, wobei die Parameter des aperiodischen SRS des weiteren umfassen:
Subframe-Informationen des SRS;
einen Zyklenwechselwert;
wobei, wenn das aperiodische SRS Eintorübertragung unterstützt, die Parameter des aperiodischen SRS des weiteren Informationen zur SRS-Übertragungsart umfassen.

7. Terminal nach Anspruch 5, der des Weiteren folgendes umfasst:
ein Einstellungsmodul (43), um eine aperiodische SRS-Sendestrategie für das Sendemodul (42) einzustellen,
wobei die aperiodische SRS-Sendestrategie folgendes umfasst:
der Terminal sendet aperiodische SRS an die Basisstation in einem aktuellen Subframe gemäß den Parametern des aperiodischen SRS, wenn das Aktivierungssignal für aperiodische SRS empfangen wird und eine voreingestellte Zahl der Subframes abgelaufen ist; oder,
der Terminal sendet aperiodische SRS an die Basisstation in einem nächstliegenden oder mehreren aperiodischen SRS-Übertragungs-Subframes eines aktuellen Subframes gemäß den Parametern des aperiodischen SRS, wenn das Aktivierungssignal für aperiodische SRS empfangen wird und eine voreingestellte Zahl der Subframes abgelaufen ist.

8. Verfahren zum Übertragen eines aperiodischen Klangreferenzsignals, SRS, mit:
einer Basisstation, die (S201) Parameter von aperiodischen SRS an einen Terminal durch Hochschichtsignale sendet; und
die Basisstation empfängt (S202) das aperiodische SRS, das von dem Terminal gemäß den Parametern des aperiodischen SRS gesendet wurde, wenn die Basisstation das Aktivierungssignal für aperiodische SRS an den Terminal sendet,
wobei die Parameter des aperiodischen SRS Frequenzbereichs-Konfigurations-Informationen des SRS umfassen, und
das Verfahren **dadurch gekennzeichnet ist, dass** die Frequenzbereichs-Konfigurations-Informationen des SRS folgendes umfassen:
separat konfigurierte Informationen für jeden Übertragungs-Subframe des aperiodischen SRS des Terminals in einem Zyklus; oder,
Informationen, die für alle Übertragungs-Subframes des aperiodischen SRS des Terminals konfiguriert sind.

9. Verfahren nach Anspruch 8, wobei die Parameter des aperiodischen SRS des weiteren umfassen:
Subframe-Konfigurationsinformationen des SRS;
einen Zyklenwechselwert;
wobei, wenn die aperiodische SRS Eintorübertragung unterstützt, die Parameter des aperiodischen SRS des weiteren Informationen zur SRS-Übertragungsart umfassen.

10. Verfahren nach Anspruch 9, wobei die Subframe-Konfigurationsinformationen des SRS einen Subframe-Konfigurationszyklus-Parameter umfassen; und
die Frequenzbereichs-Konfigurations-Informationen des Weiteren ein oder mehrere der folgenden Parameter umfassen:
anfängliche Lage der Frequenzbereich-Ressource, Übertragungsbandbreite, Übertragungskamm und Frequenzsprung-Bandbreite des Frequenzbereichs.

11. Verfahren nach Anspruch 8, wobei die Basisstation, die (S202) die aperiodische SRS empfängt, die von dem Terminal gemäß den Parametern von aperiodischen SRS gesendet wurde, nach Senden des Aktivierungssignals für aperiodische SRS an den Terminal, spezifisch folgendes umfasst:
die Basisstation empfängt das aperiodische SRS, das von dem Terminal in einem aktuellen Subframe gemäß den Parametern des aperiodischen SRS gesendet wird, wenn das Aktivierungssignal für aperiodische SRS empfangen wird und eine voreingestellte Zahl der Subframes abgelaufen ist; oder,
die Basisstation empfängt das aperiodische SRS, das von dem Terminal in einem nächstliegenden oder mehreren aperiodischen SRS-Übertragungs-Subframe(s) eines aktuellen Subframes gemäß den Parametern des aperiodischen SRS gesendet wird, wenn das Aktivierungssignal für aperiodische SRS empfangen wird und eine voreingestellte Zahl der Subframes abgelaufen ist.

12. Basisstation, mit:
einem Sendemodul (51), um ein Hochschichtsignal einschließlich Parameter eines aperiodischen Klangreferenzsignals, SRS, und ein Aktivierungssignal für aperiodische SRS an den Terminal zu senden; und
einem Empfangsmodul (52), um das aperiodische SRS zu empfangen, das von dem Terminal gemäß den Parametern von aperiodischen SRS gesendet wurde, nachdem das Sendemodul (51) das Aktivierungssignal für aperiodische SRS an den Terminal gesendet hat,
wobei die Parameter des aperiodischen SRS Frequenzbereichs-Konfigurations-Informationen des SRS umfassen, und
die Basisstation **dadurch gekennzeichnet ist, dass** die Frequenzbereichs-Konfigurations-Informationen des SRS folgendes umfassen:
separat konfigurierte Informationen für jeden Übertragungs-Subframe des aperiodischen SRS des Terminals in einem Zyklus; oder,
Informationen, die für alle Übertragungs-Subframes des aperiodischen SRS des Terminals konfiguriert sind.

13. Basisstation nach Anspruch 12, wobei die Parameter des aperiodischen SRS des Weiteren umfassen:
Subframe-Informationen des SRS;
einen Zyklenwechselwert;
wobei, wenn das aperiodische SRS Eintorübertragung unterstützt, die Parameter des aperiodischen SRS des Weiteren Informationen zur SRS-Übertragungsart umfassen.

## Revendications

1. Procédé pour émettre un signal de référence de sondage (SRS) apériodique comprenant :
un terminal reçoit (S101) des paramètres d'un SRS apériodique envoyé par une station de base par l'intermédiaire d'une signalisation de couche supérieure ;
le terminal envoie (S102) un SRS apériodique à la station de base selon les paramètres du SRS apériodique lors de la réception d'une signalisation d'activation de SRS apériodique envoyée par la station de base,
les paramètres du SRS apériodique comprenant des informations de configuration de domaine fréquentiel du SRS, et
le procédé étant **caractérisé par le fait que** les informations de configuration de domaine fréquentiel du SRS comprennent :
des informations configurées séparément pour chacune des sous-trames d'émission du SRS apériodique du terminal dans un cycle ; ou,
des informations configurées pour l'ensemble des sous-trames d'émission du SRS apériodique du terminal.

2. Procédé selon la revendication 1, dans lequel les paramètres du SRS apériodique comprennent en outre :
des informations de configuration de sous-trame du SRS ;
une valeur de décalage de cycle ;
si le SRS apériodique prend en charge une émission à un seul port, les paramètres du SRS apériodique comprenant en outre des informations de mode d'émission de SRS.

3. Procédé selon la revendication 2, dans lequel les informations de configuration de sous-trame du SRS comprennent un paramètre de cycle de configuration de sous-trame ; et
les informations de configuration de domaine fréquentiel comprennent un ou plusieurs des paramètres suivants :
l'emplacement initial d'une ressource de domaine fréquentiel, la bande passante d'émission, le peigne d'émission et la bande passante de saut de fréquence.

4. Procédé selon la revendication 1, dans lequel le terminal envoie (S102) un SRS apériodique à la station de base selon les paramètres du SRS apériodique lors de la réception de la signalisation d'activation de SRS apériodique envoyée par la station de base, comprenant de manière spécifique :
le terminal envoie un SRS apériodique à la station de base dans une sous-trame courante selon les paramètres du SRS apériodique lorsque la signalisation d'activation de SRS apériodique est reçue et qu'un nombre préétabli de sous-trames s'est écoulé ; ou,
le terminal envoie un SRS apériodique à la station de base dans une ou plusieurs sous-trames d'émission de SRS apériodique, les plus proches, d'une sous-trame courante, selon les paramètres du SRS apériodique lorsque la signalisation d'activation de SRS apériodique est reçue et qu'un nombre préétabli de sous-trames s'est écoulé.

5. Terminal, comprenant :
un module de réception (41) utilisé pour recevoir une signalisation de couche supérieure comprenant des paramètres d'un signal de référence de sondage (SRS) apériodique, et une signalisation d'activation de SRS apériodique envoyée par une station de base ; et
un module d'envoi (42) utilisé pour envoyer un SRS apériodique à la station de base selon les paramètres du SRS apériodique reçus par le module de réception (41) après que le module de réception (41) a reçu la signalisation d'activation de SRS apériodique envoyée par la station de base,
les paramètres du SRS apériodique comprenant des informations de configuration de domaine fréquentiel du SRS, et
le terminal étant **caractérisé par le fait que** les informations de configuration de domaine fréquentiel du SRS comprennent :
des informations configurées séparément pour chacune des sous-trames d'émission du SRS apériodique du terminal dans un cycle ; ou,
des informations configurées pour l'ensemble des sous-trames d'émission du SRS apériodique du terminal.

6. Terminal selon la revendication 5, dans lequel les paramètres du SRS apériodique comprennent en outre :
des informations de sous-trame du SRS ;
une valeur de décalage de cycle ;
si le SRS apériodique prend en charge une émission à un seul port, les paramètres du SRS apériodique comprenant en outre des informations de mode d'émission de SRS.

7. Terminal selon la revendication 5, comprenant en outre :
un module de réglage (43) utilisé pour définir une politique d'envoi de SRS apériodique pour le module d'envoi (42),
la politique d'envoi de SRS apériodique comprenant :
le terminal envoie un SRS apériodique à la station de base dans une sous-trame courante selon les paramètres du SRS apériodique lorsque la signalisation d'activation de SRS apériodique est reçue et qu'un nombre préétabli de sous-trames s'est écoulé ; ou
le terminal envoie un SRS apériodique à la station de base dans une ou plusieurs sous-trames d'émission de SRS apériodique, les plus proches, d'une sous-trame courante, selon les paramètres du SRS apériodique lorsque la signalisation d'activation de SRS apériodique est reçue et qu'un nombre préétabli de sous-trames s'est écoulé.

8. Procédé pour émettre un signal de référence de sondage (SRS) apériodique, comprenant les opérations :
une station de base envoie (S201) des paramètres d'un SRS apériodique à un terminal par l'intermédiaire d'une signalisation de couche supérieure ; et
la station de base reçoit (S202) le SRS apériodique envoyé par ledit terminal selon les paramètres du SRS apériodique lorsque la station de base envoie une signalisation d'activation de SRS apériodique au terminal,
les paramètres du SRS apériodique comprenant des informations de configuration de domaine fréquentiel du SRS, et
le procédé étant **caractérisé par le fait que** les informations de configuration de domaine fréquentiel du SRS comprennent :
des informations configurées séparément pour chacune des sous-trames d'émission du SRS apériodique du terminal dans un cycle ; ou,
des informations configurées pour l'ensemble des sous-trames d'émission du SRS apériodique du terminal.

9. Procédé selon la revendication 8, dans lequel les paramètres du SRS apériodique comprennent en outre :
des informations de configuration de sous-trame du SRS ;
une valeur de décalage de cycle ;
si le SRS apériodique prend en charge une émission à un seul port, les paramètres du SRS apériodique comprenant en outre des informations de mode d'émission de SRS.

10. Procédé selon la revendication 9, dans lequel les informations de configuration de sous-trame du SRS comprennent un paramètre de cycle de configuration de sous-trame ; et
les informations de configuration de domaine fréquentiel comprennent en outre un ou plusieurs des paramètres suivants :
l'emplacement initial d'une ressource de domaine fréquentiel, la bande passante d'émission, le peigne d'émission et la bande passante de saut de fréquence du domaine fréquentiel.

11. Procédé selon la revendication 8, dans lequel la station de base reçoit (S202) le SRS apériodique envoyé par le terminal selon les paramètres du SRS apériodique lors de l'envoi d'une signalisation d'activation de SRS apériodique au terminal, comprenant de manière spécifique :
la station de base reçoit le SRS apériodique, qui est envoyé par le terminal dans une sous-trame courante selon les paramètres du SRS apériodique lorsque la signalisation d'activation de SRS apériodique est reçue et qu'un nombre préétabli de sous-trames s'est écoulé ; ou,
la station de base reçoit le SRS apériodique, qui est envoyé par le terminal dans une ou plusieurs sous-trames d'émission de SRS apériodique, les plus proches, d'une sous-trame courante, selon les paramètres du SRS apériodique lorsque la signalisation d'activation de SRS apériodique est reçue et qu'un nombre préétabli de sous-trames s'est écoulé.

12. Station de base, comprenant :
un module d'envoi (51) utilisé pour envoyer une signalisation de couche supérieure comprenant des paramètres d'un signal de référence de sondage (SRS) apériodique, et une signalisation d'activation de SRS apériodique au terminal ; et
un module de réception (52) utilisé pour recevoir le SRS apériodique envoyé par le terminal selon les paramètres du SRS apériodique après que le module d'envoi (51) a envoyé la signalisation d'activation de SRS apériodique au terminal,
les paramètres du SRS apériodique comprenant des informations de configuration de domaine fréquentiel du SRS, et
la station de base étant **caractérisée par le fait que** les informations de configuration de domaine fréquentiel du SRS comprennent :
des informations configurées séparément pour chacune des sous-trames d'émission du SRS apériodique du terminal dans un cycle ; ou,
des informations configurées pour l'ensemble des sous-trames d'émission du SRS apériodique du terminal.

13. Station de base selon la revendication 12, dans laquelle les paramètres du SRS apériodique comprennent en outre :
des informations de sous-trame du SRS ;
une valeur de décalage de cycle ;
si le SRS apériodique prend en charge une émission à un seul port, les paramètres du SRS apériodique comprenant en outre des informations de mode d'émission de SRS.
